# EUROPEAN PATENT APPLICATION

(11) **EP 4 641 667 A1**
(43) Date of publication of application: **29.10.2025**
(21) Application number: 23907593.0
(22) Date of filing: 14.12.2023
(51) Int. Cl.: H01M 4/36, H01M 4/525, H01M 4/505, H01M 4/131, H01M 10/052, H01M 4/02

(54) **POSITIVE ELECTRODE ACTIVE MATERIAL FOR LITHIUM SECONDARY BATTERY, MANUFACTURING METHOD OF SAME, AND LITHIUM SECONDARY BATTERY COMPRISING SAME**

(30) Priority: 19.12.2022 KR 20220178460
(71) Applicant: Research Institute of Industrial Science & Technology, Pohang-si, Gyeongsangbuk-do 37673 (KR); Posco Future M Co., Ltd., Pohang-si, Gyeongsangbuk-do 37918 (KR)
(72) Inventor: NAM, Sang Cheol, Seoul 02587 (KR); YU, Byongyong, Incheon 22003 (KR); HONG, Ki Joo, Incheon 21986 (KR); CHANG, Joon Ha, Incheon 21982 (KR); JUNG, Yongjo, Incheon 22002 (KR)
(74) Representative: Meissner Bolte Partnerschaft mbB
(86) International application number: PCT/KR2023/020670
(87) International publication number: WO 2024/136307

(57) **Abstract**

The present invention relates to a positive electrode active material for a lithium secondary battery, which comprises:
a core including a layered lithium transition metal oxide containing 60 mol% or more of nickel (Ni) based on the total moles of transition metals; and a coating layer disposed on the core and comprising cobalt (Co), aluminum (Al), or a combination thereof, wherein the positive electrode active material is composed of a single particle, and the coating layer is formed in an island-type structure.

## Description

### [Technical Field]

The present invention relates to a positive electrode active material for a lithium secondary battery, a method for manufacturing the same, and a lithium secondary battery including the same, and more particularly, to a positive electrode active material for a lithium secondary battery composed of a single particle, a method for manufacturing the same, and a lithium secondary battery including the same.

### [Background]

Driven by the recent explosive demand for electric vehicles and the need for extended driving ranges, the development of secondary batteries with high capacity and high energy density is being actively pursued worldwide.

In particular, to meet such demands, high-nickel NCM (Nickel-Cobalt-Manganese) cathode materials are required. However, increasing the nickel content leads to reduced particle strength, which in turn results in the formation of microcracks during charge and discharge. These microcracks cause an increase in the specific surface area, thereby accelerating side reactions with the electrolyte, which in turn leads to gas generation. Furthermore, structural instability promotes the reduction of unstable Ni³⁺ to stable Ni²⁺, increasing cation mixing through the formation of stable NiO. These issues limit the practical use of high-nickel cathode materials in lithium-ion batteries for electric vehicles and energy storage systems.

To address these issues, there has been a growing demand for single-particle active materials, departing from the conventional polycrystalline structure in which primary particles aggregate to form secondary particles. Compared to polycrystalline materials, single-crystalline particles have a smaller specific surface area, which effectively suppresses side reactions with the electrolyte and significantly reduces gas generation.

However, in the case of single particles, a resistive layer of nickel oxide tends to form on the surface during the manufacturing process, leading to an increase in initial resistance and degradation of cycle performance.

### [Detailed Description of the Invention]

### [Technical Problem]

Accordingly, an object of the present invention is to provide a single-particle positive electrode active material, a method for manufacturing the same, and a lithium secondary battery including the same, which can reduce initial resistance, thereby improving the capacity and output characteristics of the battery and enhancing its cycle performance.

### [Technical Solution]

According to one embodiment of the present invention, there is provided a positive electrode active material for a lithium secondary battery, comprising: a core comprising a layered lithium transition metal oxide containing 60 mol% or more of nickel (Ni) based on the total moles of transition metals; and a coating layer disposed on the core and comprising cobalt (Co), aluminum (Al), or a combination thereof, wherein the positive electrode active material is composed of a single particle, and the coating layer is formed in an island-type structure.

The nickel content may be 85 mol% or more based on the total moles of transition metals.

The coating layer may further comprise lithium and may be an oxide.

The coating layer may be formed in a discontinuous pattern of protrusions or hemispherical-shaped coating materials disposed on the core.

The coating layer may have a layered crystal structure.

The coating layer may be structurally connected to the core via the layered crystal structure.

The coating layer may comprise both cobalt and aluminum, and a molar ratio (Co/Al) of cobalt to aluminum may be from 3 to 18.

The content of the coating layer may be from 1 wt% to 3 wt% based on the total weight of the positive electrode active material for a lithium secondary battery.

The lithium transition metal oxide may further comprise zirconium (Zr), aluminum (Al), or a combination thereof.

The lithium transition metal oxide may be represented by the following Chemical Formula 1:

[Chemical Formula 1] Liₐ[NiₓCo_{γ}Mn*z*M₁*w*₁M₂*w*₂]O₂

In Chemical Formula 1, 0.8 ≤ a ≤ 1.2, 0.6 ≤ x ≤ 0.97, 0 ≤ y ≤ 0.2, 0 < z ≤ 0.2, 0 ≤ w₁ ≤ 0.1, 0 ≤ w₂ ≤ 0.1, M₁ is Zr, Al, or a combination thereof, and M₂ is Mg, Ti, Nb, W, Sc, Si, V, Fe, Y, Mo, Ce, Hf, Ta, La, Sr, or a combination thereof.

Another embodiment of the present invention provides a method for manufacturing a positive electrode active material for a lithium secondary battery, the method comprising: preparing a transition metal hydroxide comprising nickel; forming a mixture comprising the transition metal hydroxide and a lithium raw material and performing calcination at a temperature of 710°C to 930°C to form a lithium transition metal oxide; and mixing the lithium transition metal oxide with a coating raw material and performing heat treatment at a temperature of 670°C to 740°C to form a coating layer, wherein the coating raw material comprises a cobalt raw material, an aluminum raw material, or a combination thereof.

In the step of forming the lithium transition metal oxide, the mixture may further comprise a doping raw material, and the doping raw material may comprise a zirconium raw material, an aluminum raw material, or a combination thereof.

In the step of forming the coating layer, the content of the coating raw material may be from 1 wt% to 3 wt% based on the total weight of the lithium transition metal oxide and the coating raw material.

The coating raw material may be fine particles having an average particle diameter (D50) of 200 to 500 nm.

Another embodiment of the present invention provides a positive electrode comprising the positive electrode active material for a lithium secondary battery as described above.

Still another embodiment of the present invention provides a lithium secondary battery comprising a positive electrode, a negative electrode, and an electrolyte disposed between the positive electrode and the negative electrode,
wherein the positive electrode comprises the above-described positive electrode active material for a lithium secondary battery.

### [Advantageous Effects of the Invention]

In one embodiment of the present invention, the positive electrode active material for a lithium secondary battery is a single particle and comprises a coating layer containing cobalt, aluminum, or a combination thereof. Since the coating layer is formed in an island-type structure, initial resistance can be reduced, thereby improving the capacity and output characteristics of the battery, as well as enhancing its cycle performance.

In another embodiment of the present invention, the method for manufacturing the positive electrode active material for a lithium secondary battery enables facile preparation of a single-particle active material having an island-type coating layer by appropriately controlling the calcination temperature during formation of the lithium transition metal oxide and the heat treatment temperature during formation of the coating layer.

### [Brief Description of the Drawings]

FIG. 1 is a schematic view of a positive electrode active material for a lithium secondary battery according to one embodiment of the present invention.
FIG. 2 is a schematic view of a conventional positive electrode active material for a lithium secondary battery.
FIG. 3 is a surface SEM image of the single-particle positive electrode active material prepared according to Example 1-1.
FIG. 4 is a surface SEM image of the single-particle positive electrode active material prepared according to Comparative Example 1.
FIG. 5 is a post-FIB (Focused Ion Milling) image of the positive electrode active material prepared according to Example 1-1.
FIG. 6 is a post-FIB (Focused Ion Milling) image of the positive electrode active material prepared according to Comparative Example 1.
FIG. 7 is an elemental mapping image of the post-FIB image of the positive electrode active material prepared according to Example 1-1.
FIG. 8 is an EDS line scan result graph showing elemental distribution from the inside to the outside of region 1 in the post-FIB image of the positive electrode active material prepared according to Example 1-1.
FIG. 9 is an EDS line scan result graph showing elemental distribution from the inside to the outside of region 2 in the post-FIB image of the positive electrode active material prepared according to Example 1-1.
FIG. 10 is an EDS line scan result graph showing elemental distribution from the inside to the outside of region 1 in the post-FIB image of the positive electrode active material prepared according to Comparative Example 1.
FIG. 11 is a graph showing the EELS measurement result at the coating layer of the positive electrode active material prepared according to Example 1-1.
FIG. 12 is a cross-sectional TEM image of the positive electrode active material prepared according to Example 1-1.
FIG. 13 is an SAED pattern analysis image of the core and coating layer regions of the positive electrode active material prepared according to Example 1-1.

### [Mode for Carrying Out the Invention]

The terms such as "first", "second", and "third", etc., are used to describe various elements, components, regions, layers, and/or sections and are not intended to be limiting. These terms are used solely for the purpose of distinguishing one element, component, region, layer, or section from another. Accordingly, a "first" element, component, region, layer, or section described hereinafter may be referred to as a "second" element, component, region, layer, or section without departing from the scope of the present invention.

The terminology used herein is intended only to describe specific embodiments and is not intended to limit the scope of the invention. As used herein, the singular forms include plural referents unless the context clearly dictates otherwise. The term "comprising/including/involving/having" as used in the specification specifies the presence of stated features, regions, integers, steps, operations, elements, and/or components, but does not preclude the presence or addition of one or more other features, regions, integers, steps, operations, elements, and/or components.

When a part is referred to as being "on" or "above/over" another part, it may be directly on or over the other part or there may be an intervening part between them. **In** contrast, when a part is referred to as being "directly on" or "directly aove/over" another part, it means that there is no intervening part between them.

Unless otherwise defined, all technical and scientific terms used herein have the same meaning as commonly understood by one of ordinary skill in the art to which this invention belongs. Commonly used terms are to be interpreted in accordance with their meaning in the relevant technical field and the context of this disclosure, and are not to be interpreted in an overly idealistic or overly formal sense unless explicitly defined otherwise.

Further, unless otherwise specified, all percentages are by weight, and 1 ppm refers to 0.0001 wt%.

As used in this specification, the phrase "a combination thereof" in a Markush-type expression means one or more mixtures or combinations selected from the group consisting of the components recited in the Markush-type expression, and is to be interpreted as including at least one selected from the group.

Hereinafter, embodiments of the present invention will be described in detail so that those skilled in the art may readily practice the invention. However, the present invention is not limited to the embodiments set forth herein and may be implemented in various different forms.

### 1. Positive Electrode Active Material

According to one embodiment of the present invention, there is provided a positive electrode active material for a lithium secondary battery, which comprises:
a core including a layered lithium transition metal oxide containing 60 mol% or more of nickel (Ni) based on the total moles of transition metals; and a coating layer disposed on the core and comprising cobalt (Co), aluminum (Al), or a combination thereof, wherein the positive electrode active material is composed of a single particle, and the coating layer is formed in an island-type structure.

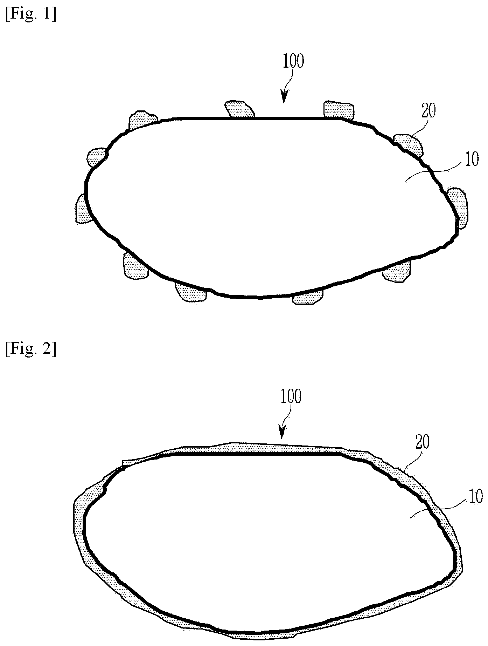

FIG. 1 is a schematic illustration of the positive electrode active material for a lithium secondary battery according to one embodiment of the present invention. Referring to FIG. 1, the positive electrode active material 100 includes a core 10 and a coating layer 20 disposed on the core. In this embodiment, the positive electrode active material 100 is composed of a single particle.

More specifically, a positive electrode active material can be classified as a non-agglomerated primary particle or a secondary particle formed by aggregation of multiple primary particles. A primary particle refers to the smallest distinguishable particle unit observed as a single mass in a cross-sectional SEM image. It may be composed of a single crystallite or multiple crystallites.

By configuring the active material as a single particle, issues associated with secondary particles-such as increased side reactions due to higher specific surface area, and structural instability from cracks formed between primary particles during repeated charge/discharge cycles-can be mitigated. This results in improved cycle performance. Additionally, higher rolling density during electrode fabrication can be achieved, thereby enhancing the energy density of the electrode.

However, single-particle active materials often suffer from increased initial resistance and deteriorated cycle characteristics due to the formation of a resistive nickel oxide layer on the surface caused by unstable Ni³⁺ or Ni⁴⁺ ions.

To address this, in one embodiment of the present invention, the positive electrode active material includes a coating layer 20 comprising cobalt, aluminum, or a combination thereof formed on the lithium transition metal oxide core.

By including such a coating layer, the formation of a resistive nickel oxide layer is suppressed, thereby reducing initial resistance, improving capacity and output characteristics, and enhancing cycle performance. Moreover, the coating process can reduce residual lithium on the surface of the lithium transition metal oxide, thus minimizing performance degradation due to residual lithium.

FIG. 1 shows an example of a positive electrode active material with an island-type coating according to the present invention, whereas FIG. 2 illustrates a conventional conformal (full) coating type.

**In** particular, the coating layer of the present invention is of the island type.

More specifically, the morphology of the coating layer can be classified as a conformal coating, which uniformly and continuously covers the entire surface of the active material, or an island coating, which covers the surface in a discontinuous dot-like form. The optimal coating morphology can vary depending on the coating material.

Through extensive research, the inventors have discovered that, when using coating materials comprising cobalt, aluminum, or a combination thereof, an island coating is more effective for improving battery performance. This is believed to be because such coating materials tend to form lithium- and oxygen-containing composite oxides during heat treatment, and if this oxide layer fully covers the surface (as in conformal coatings), it increases resistance to lithium ion insertion/extraction from the core. Consequently, by adopting an island coating, initial resistance is reduced, battery capacity and output are improved, and cycle life is enhanced.

Specifically, the coating layer may further include lithium and may be an oxide. More particularly, it may be a composite oxide comprising lithium and cobalt, aluminum, or a combination thereof. This is a result of a reaction between the residual lithium on the surface of the lithium transition metal oxide and the coating raw materials during the manufacturing process.

The coating layer may comprise a plurality of protrusions or hemispherical-shaped coating domains discontinuously disposed on the core.

The size of each protrusion or hemispherical coating domain may be from 50 to 400 nm. This size range ensures a random, island-type coating structure.

The morphology and size of such coating domains can be verified through surface analysis using SEM (Scanning Electron Microscopy) or TEM (Transmission Electron Microscopy).

**In** particular, the coating layer may have a layered crystal structure. That is, both the core and the coating layer of the active material according to the present invention may exhibit layered crystal structures.

Unlike conventional inorganic coatings that act as a barrier to lithium-ion transport into the core, the layered structure of the present invention can serve as a channel for lithium-ion conduction. The layered structure of the coating can be confirmed via SAED (Selected Area Electron Diffraction) pattern analysis.

When the coating layer is structurally connected to the core through a layered crystal structure, lithium-ion conductivity can be significantly enhanced. This effect can be confirmed by performing an EDS line scan across the boundary region between the core and the coating layer.

The coating layer may include cobalt alone, aluminum alone, or a combination of both. More specifically, when the coating layer includes both cobalt and aluminum, the improvement in battery performance can be more effectively realized.

**In** such a case, the molar ratio (Co/Al) of cobalt to aluminum in the coating layer may range from 3 to 18, and more preferably from 4 to 17, thereby providing further optimized battery performance.

The content of the coating layer may be from 1 wt% to 3 wt%, and more preferably from 1.2 wt% to 2.8 wt%, based on the total weight of the positive electrode active material for a lithium secondary battery. If the content is too low, the aforementioned improvements in initial resistance, capacity, output, and cycle performance due to the coating may be insufficient. Conversely, if the content is too high, the active core material content becomes relatively low, which may result in reduced battery capacity.

The core includes a layered lithium transition metal oxide. The nickel content in the core may be 60 mol% or more, and more preferably 85 mol% or more, based on the total moles of transition metals. While a higher nickel content allows for higher capacity, it tends to reduce structural stability due to cation mixing. However, as described above, the positive electrode active material of the present invention is composed of a single particle and includes a coating layer comprising cobalt, aluminum, or a combination thereof, thereby enabling the realization of both high nickel content and enhanced battery stability.

The lithium transition metal oxide may further comprise a doping element such as zirconium (Zr), aluminum (Al), or a combination thereof. Incorporating such doping elements can further enhance the structural stability of the active material and thereby maximize the battery's cycle performance.

More specifically, Zr ions occupy lithium sites and act as pillars to mitigate the shrinkage of lithium-ion pathways during charge and discharge cycles, thus stabilizing the layered structure. This effect reduces cation mixing and increases the lithium diffusion coefficient, contributing to improved cycle life.

In addition, Al ions migrate into tetragonal lattice sites and suppress degradation of the layered structure into a spinel phase, which has lower lithium-ion mobility.

The doping element may include Zr alone, Al alone, or both Zr and Al. Preferably, both Zr and Al are included to maximize the improvement in cycle performance.

The Zr content may be from 0.1 mol% to 1 mol%, and more preferably from 0.16 mol% to 0.64 mol%, based on the total moles of transition metals.

The Al content may be from 0.1 mol% to 4 mol%, and more preferably from 0.4 mol% to 2.8 mol%, based on the total moles of transition metals.

The lithium transition metal oxide may be represented by the following Chemical Formula 1:

[Chemical Formula 1] Liₐ[NiₓCo_{γ}Mn*z*M₁*w*₁M₂*w*₂]O₂

In Chemical Formula 1:
0.8 ≤ a ≤ 1.2, 0.6 ≤ x ≤ 0.97, 0 ≤ y ≤ 0.2, 0 < z ≤ 0.2, 0 ≤ w₁ ≤ 0.1, 0 ≤ w₂ ≤ 0.1, M₁ is Zr, Al, or a combination thereof, and M₂ is Mg, Ti, Nb, W, Sc, Si, V, Fe, Y, Mo, Ce, Hf, Ta, La, Sr, or a combination thereof.

In the lithium transition metal oxide of Chemical Formula 1, the lithium content (a) is preferably from 0.8 to 1.2. If the value of "a" is too low, the capacity may decrease. If it is too high, the active material may become too hard after calcination, making it difficult to pulverize, and leading to an increase in gas generation due to lithium byproducts. Considering both capacity improvement and sinterability during active material synthesis, the lithium content is more preferably from 0.9 to 1.1.

Nickel, corresponding to "x" in Chemical Formula 1, may be present in an amount of 0.6 to 0.97, and more preferably 0.85 to 0.97. If the nickel content is too low, achieving high capacity becomes difficult; if too high, the structural stability of the active material may be compromised, adversely affecting cycle life and safety.

Cobalt, corresponding to "y", may be included in an amount of 0 to 0.2. If the cobalt content is too low, achieving both high rate capability and high powder density may be difficult. If too high, the cost of raw materials increases and reversible capacity may decrease.

Manganese, corresponding to "z", may be present in an amount of greater than 0 to 0.2. If the manganese content is too low, manufacturing costs may increase and stability may deteriorate. If too high, capacity and output characteristics may degrade.

M₁, corresponding to w₁, is a doping element (Zr, Al, or a combination thereof) and may be present in an amount of 0 to 0.1.

M₂, corresponding to w₂, is an additional dopant (Mg, Ti, Nb, W, Sc, Si, V, Fe, Y, Mo, Ce, Hf, Ta, La, Sr, or a combination thereof) and may also be present in an amount of 0 to 0.1.

### 2. Method for Manufacturing Positive Electrode Active Material

The inventors of the present invention have conducted extensive research to develop a method for easily producing a positive electrode active material that is both a single particle and has an island-type coating layer. As a result, they have found that controlling the heat treatment temperature for forming the coating layer is critical, and have thereby completed a manufacturing method for the active material.

According to another embodiment of the present invention, a method for manufacturing a positive electrode active material for a lithium secondary battery is provided, the method comprising: preparing a transition metal hydroxide comprising nickel; forming a mixture including the transition metal hydroxide and a lithium raw material, and performing calcination at a temperature of 710°C to 930°C to form a lithium transition metal oxide; and mixing the lithium transition metal oxide with a coating raw material and performing heat treatment at a temperature of 670°C to 740°C to form a coating layer, wherein the coating raw material comprises a cobalt raw material, an aluminum raw material, or a combination thereof.

Hereinafter, the manufacturing method of the positive electrode active material for a lithium secondary battery according to another embodiment of the present invention will be described step by step.

First, a transition metal hydroxide comprising nickel is prepared.
The transition metal hydroxide serves as a precursor for the positive electrode active material. At this stage, doping elements may optionally be introduced during the precursor preparation step.

For example, the precursor may be prepared by co-precipitating a transition metal-containing solution comprising a nickel raw material, a manganese raw material, and optionally a doping raw material including Zr, Al, Mg, Ti, Nb, W, Sc, Si, V, Fe, Y, Mo, Ce, Hf, Ta, La, Sr, or a combination thereof, with the addition of an ammonia solution and a caustic soda solution.

The nickel raw material is not particularly limited, as long as it is typically used for producing precursors of positive electrode active materials. Specific examples include nickel-containing sulfates, acetates, nitrates, halides, sulfides, hydroxides, oxides, or oxyhydroxides, such as NiSO₄, NiSO₄·6H2O, Ni(OH)₂, NiO, NiOOH, NiCO₃·2Ni(OH)₂·4H2O, NiC₂O₂·2H₂O, Ni(NO₃)₂·6H₂O, nickel salts of fatty acids, nickel halides, or combinations thereof, without being limited thereto.

The manganese raw material is also not particularly limited and may include sulfates, acetates, nitrates, halides, sulfides, hydroxides, oxides, oxyhydroxides, or combinations thereof. Specific examples include MnSO₄, MnCO₃, Mn(NO₃)₂, manganese acetate, manganese dicarboxylates, manganese citrate, manganese salts of fatty acids, manganese oxides such as Mn₂O₃, MnO₂, Mn₃O₄, manganese oxyhydroxides, manganese chloride, or combinations thereof.

The ammonia solution may function as a complexing agent, and may include NH₃, NH₄OH, (NH₄)₂SO₄, NH₄NO₃, NH₄Cl, CH₃COONH₄, NH₄CO₃, or a combination thereof. The ammonia solution may be in aqueous form, and the solvent may be water or a mixture of water and an organic solvent miscible therewith (e.g., alcohols).

The caustic soda solution may serve as a precipitating agent or pH adjuster, and may include hydroxides of alkali or alkaline earth metals, such as NaOH, KOH, or Ca(OH)₂, and their hydrates or combinations thereof. It may also be used in aqueous form with a solvent of water or a water-compatible organic solvent (e.g., alcohols).

The co-precipitation reaction may be performed under an inert atmosphere such as nitrogen or argon.
The reaction temperature within the reactor may be from 30°C to 70°C, more specifically from 40°C to 60°C, and even more preferably from 45°C to 55°C.

Through the above process, particles of nickel-manganese-(dopant) hydroxide are precipitated and collected from the reaction solution. These precipitated particles can be separated and dried using conventional methods to obtain the precursor. The precursor may be in the form of secondary particles formed by aggregation of primary particles.

By adjusting the concentration of the nickel and manganese raw materials, a precursor in which the nickel content accounts for 60 mol% or more, or preferably 85 mol% or more, of the total moles of metals can be prepared. In other words, the nickel content in the transition metal hydroxide may be 60 mol% or more, or 85 mol% or more, based on the total moles of transition metals, thereby enabling a high-capacity battery design.

Next, a mixture including the transition metal hydroxide and a lithium raw material is formed and subjected to calcination at a temperature of 730°C to 900°C to form a lithium transition metal oxide.

The mixture may further include doping raw materials, which may comprise zirconium raw materials, aluminum raw materials, or combinations thereof. Additionally, the doping raw material may optionally include other dopants such as Mg, Ti, Nb, W, Sc, Si, V, Fe, Y, Mo, Ce, Hf, Ta, La, Sr, or combinations thereof.

In particular, the calcination temperature may be from 710°C to 930°C, and more preferably from 720°C to 920°C. If the calcination temperature is too low, it may be difficult to form a single-particle structure, and sufficient particle growth may not occur. If the temperature is too high, the structural stability of the active material may deteriorate, reducing its reversible capacity.

The calcination time may be from 2 to 36 hours, and more preferably from 20 to 30 hours. If the calcination time is too short, the synthesis reaction may not be complete, or the crystal structure may not fully develop. If too long, productivity may be adversely affected.

The calcination may be performed under an oxygen atmosphere. When a high-nickel (Ni-rich) positive electrode active material is subjected to high-temperature, long-duration calcination, cation mixing can occur wherein Ni²⁺ occupies lithium layers within the layered crystal structure. To prevent this, it is desirable to synthesize the positive electrode active material under an oxygen atmosphere.

If necessary, the calcination may be divided into a first calcination and a second calcination step.

Next, the lithium transition metal oxide is mixed with a coating raw material and subjected to heat treatment at a temperature of 670°C to 740°C to form a coating layer.
The coating raw material includes a cobalt raw material, an aluminum raw material, or a combination thereof.
The coating raw material may further include a lithium raw material.

The cobalt raw material is not particularly limited as long as it contains cobalt, but preferably, cobalt hydroxide (Co(OH)₂) may be used. The aluminum raw material is also not particularly limited as long as it contains aluminum, but preferably, aluminum hydroxide (Al(OH)₃) may be used. The lithium raw material is not particularly limited as long as it contains lithium, but preferably, lithium hydroxide monohydrate (LiOH·H₂O) may be used.

In particular, the heat treatment temperature for forming the coating layer may be from 670°C to 740°C, and more preferably from 680°C to 730°C. If the temperature is too low, the coating layer may not form sufficiently. If the temperature is too high, a conformal coating rather than an island-type coating may form, or cobalt or aluminum may excessively diffuse into the interior of the active material rather than remaining on the surface, thus diminishing the intended performance enhancement effect of the coating.

The content of the coating raw material may be from 1 wt% to 3 wt%, and more preferably from 1.2 wt% to 2.8 wt%, based on the total weight of the lithium transition metal oxide and the coating raw material. If the content is too low, the amount of coating formed may be insufficient, resulting in minimal improvements in initial resistance or cycle life. If the content is too high, the relative content of the active core may become too low, thereby reducing battery capacity.

More specifically, the content of the cobalt raw material may be from 1 wt% to 2 wt% based on the total weight of the lithium transition metal oxide and the coating raw material. The content of the aluminum raw material may be from 0.2 wt% to 0.8 wt% based on the same basis.

The coating raw material may be fine particles having an average particle diameter (D50) of 200 to 500 nm. If the particle size is too small, agglomeration may occur during dry mixing, resulting in non-uniform coating. Conversely, if the particle size is too large, the resulting coating particles may be too large, increasing resistance.

### 3. Positive Electrode and Lithium Secondary Battery

Another embodiment of the present invention provides a positive electrode comprising the above-described positive electrode active material for a lithium secondary battery.

Specifically, the positive electrode may include a positive electrode current collector and a positive electrode active material layer disposed thereon, wherein the positive electrode active material layer comprises the aforementioned positive electrode active material.

The positive electrode current collector is not particularly limited as long as it has conductivity and does not induce chemical changes in the battery. Examples include stainless steel, aluminum, nickel, titanium, sintered carbon, or aluminum or stainless steel whose surfaces are treated with carbon, nickel, titanium, or silver. The current collector typically has a thickness of 3 to 500 µm and may have fine surface roughness to enhance the adhesion of the positive electrode active material. Various forms such as films, sheets, foils, nets, porous bodies, foams, and nonwoven fabrics may be used.

The positive electrode active material layer may optionally include a binder and/or a conductive material in addition to the positive electrode active material.

The binder improves adhesion between the active material particles and between the active material and the current collector. Examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer (EPDM) rubber, sulfonated EPDM, styrene-butadiene rubber (SBR), fluororubber, or various copolymers thereof. These may be used alone or in combination. The binder is typically included in an amount of 1 to 30 wt% based on the total weight of the positive electrode active material layer.

The conductive material imparts conductivity to the electrode and is not particularly limited as long as it has electronic conductivity and does not cause chemical changes in the battery. Examples include graphite such as natural or artificial graphite; carbon-based materials such as carbon black, acetylene black, ketjen black, channel black, furnace black, lamp black, thermal black, and carbon fibers; metal powders or fibers such as copper, nickel, aluminum, and silver; conductive whiskers such as zinc oxide and potassium titanate; conductive metal oxides such as titanium oxide; and conductive polymers such as polyphenylene derivatives. These may also be used alone or in combination. The conductive material is typically included in an amount of 1 to 30 wt% based on the total weight of the positive electrode active material layer.

The positive electrode may be manufactured using conventional methods, except that it includes the aforementioned active material. Specifically, the electrode may be produced by applying a composition comprising the active material and, optionally, a binder, conductive material, and solvent onto the current collector, followed by drying and rolling. The types and amounts of the positive electrode active material, binder, and conductive material are as described above.

The solvent used may be any commonly used solvent in the art, including, but not limited to, dimethyl sulfoxide (DMSO), isopropyl alcohol, N-methylpyrrolidone (NMP), acetone, or water. A single solvent or a mixture of two or more solvents may be used. The amount of solvent should be sufficient to dissolve or disperse the positive electrode active material, conductive material, and binder, considering slurry coating thickness and manufacturing yield, and to provide a viscosity suitable for achieving excellent uniformity in coating thickness during electrode fabrication.

Alternatively, the positive electrode may be fabricated by casting the composition for forming the active material layer onto a separate support and then laminating the peeled-off film onto the positive electrode current collector.

Another embodiment of the present invention provides a lithium secondary battery comprising the positive electrode described above.

More specifically, the lithium secondary battery may include a positive electrode, a negative electrode positioned opposite the positive electrode, a separator interposed between the positive and negative electrodes, and an electrolyte. The positive electrode is as described previously.

Additionally, the lithium secondary battery may optionally further include a battery casing housing the electrode assembly of the positive electrode, negative electrode, and separator, and a sealing member for sealing the battery casing.

The negative electrode may include a negative electrode current collector and a negative **electrode** active material layer disposed on the current collector.

The negative electrode current collector is not particularly limited as long as it has high conductivity and does not cause chemical changes in the battery. Examples include copper, stainless steel, aluminum, nickel, titanium, sintered carbon, or copper or stainless steel whose surface is treated with carbon, nickel, titanium, or silver, as well as aluminum-cadmium alloys. The current collector may have a thickness of 3 to 500 µm and may have surface roughness formed thereon to enhance the adhesion of the active material. It may be used in various forms such as films, sheets, foils, nets, porous bodies, foams, or nonwoven fabrics.

The negative electrode active material layer may include a negative electrode active material and optionally a binder and a conductive material. It may be formed, for example, by applying a composition including the negative electrode active material, and optionally a binder and conductive material, onto the negative electrode current collector, followed by drying. Alternatively, the composition may be cast onto a separate support, and the resulting film peeled off and laminated onto the current collector.

As the negative electrode active material, a compound capable of reversible lithium intercalation and deintercalation may be used. Specific examples include carbon-based materials such as artificial graphite, natural graphite, graphitized carbon fibers, and amorphous carbon; alloyable metal-based materials such as Si, Al, Sn, Pb, Zn, Bi, In, Mg, Ga, Cd, Si alloys, Sn alloys, or Al alloys; metal oxides such as SiO_{β} (0 < β < 2), SnO₂, vanadium oxides, and lithium vanadium oxides; and composites such as Si-C or Sn-C composites that include the metal-based material and a carbon material. One or more of these may be used. Additionally, a thin metal lithium film may be used as the negative electrode active material.

Carbon materials may include both low-crystalline and high-crystalline carbons. Low-crystalline carbons include soft carbon and hard carbon. High-crystalline carbons include amorphous, flake, platelet, spherical, or fibrous natural or artificial graphite, kish graphite, pyrolytic carbon, mesophase pitch-based carbon fiber, mesocarbon microbeads, mesophase pitches, and petroleum or coal tar pitch-derived cokes that are typically calcined at high temperatures.

The binder and conductive material may be the same as those described above for the positive electrode.

**In** the lithium secondary battery according to the present invention, the separator serves to separate the anode and cathode and to provide a path for lithium ion migration. Any separator typically used in lithium secondary batteries may be employed without particular limitation. Preferably, the separator has low ionic resistance and excellent electrolyte wettability. Specifically, a porous polymer film made of a polyolefin-based polymer such as polyethylene homopolymer, polypropylene homopolymer, ethylene/butene copolymer, ethylene/hexene copolymer, or ethylene/methacrylate copolymer, or a multilayer structure composed of two or more of these films may be used. Conventional porous nonwoven fabrics, such as those made from high-melting-point glass fibers or polyethylene terephthalate fibers, may also be used. **In** addition, ceramic-containing or polymer-containing coated separators may be used to enhance thermal and mechanical stability, and these may be in single- or multi-layer configurations.

As for the electrolyte used in the lithium secondary battery, it may be selected from organic liquid electrolytes, inorganic liquid electrolytes, solid polymer electrolytes, gel-type polymer electrolytes, solid inorganic electrolytes, molten inorganic electrolytes, and the like, without limitation.

Specifically, the organic liquid electrolyte may comprise an organic solvent and a lithium salt.

The organic solvent is not particularly limited as long as it functions as a medium for ionic conduction in electrochemical reactions. Examples of organic solvents include:
Ester-based solvents such as methyl acetate, ethyl acetate, γ-butyrolactone, and ε-caprolactone; Ether-based solvents such as dibutyl ether and tetrahydrofuran; Ketone-based solvents such as cyclohexanone; Aromatic hydrocarbon-based solvents such as benzene and fluorobenzene; Carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); Alcohol-based solvents such as ethanol and isopropyl alcohol; Nitriles such as R-CN (where R is a C₂-C₂₀ linear, branched, or cyclic hydrocarbon group and may include an aromatic or ether linkage); Amides such as dimethylformamide; Dioxolanes such as 1,3-dioxolane; and Sulfolanes.

Among these, carbonate-based solvents are preferred. Particularly preferred are mixtures of cyclic carbonates (e.g., EC or PC) that exhibit high ionic conductivity and high dielectric constant with linear carbonates (e.g., EMC, DMC, or DEC) that have low viscosity. A volume ratio of about 1: 1 to about 1:9 (cyclic:linear) may be employed to optimize electrolyte performance.

The lithium salt is not particularly limited as long as it provides lithium ions for the battery. Specific examples include: LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, and LiB(C₂O₄)₂.

The concentration of the lithium salt is preferably in the range of 0.1 M to 2.0 M. Within this range, the electrolyte can maintain appropriate conductivity and viscosity, thereby enabling excellent electrochemical performance and effective lithium ion mobility.

The electrolyte may further include one or more additives for purposes such as improving cycle life, suppressing capacity fading, or enhancing discharge capacity. Examples include haloalkylene carbonates (e.g., difluoroethylene carbonate), pyridine, triethyl phosphate, triethanolamine, cyclic ethers, ethylenediamine, n-glyme, hexamethylphosphoramide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, and aluminum trichloride. These additives may be included in an amount of 0.1 to 5 wt% based on the total weight of the electrolyte.

As described above, the lithium secondary battery comprising the positive electrode active material of the present invention exhibits excellent discharge capacity, output characteristics, and capacity retention, making it useful for portable electronic devices such as mobile phones, laptop computers, and digital cameras, as well as for electric vehicles including hybrid electric vehicles (HEVs).

Accordingly, another embodiment of the present invention provides a battery module comprising one or more unit cells of the lithium secondary battery described above, and a battery pack comprising the battery module.

The battery module or battery pack may be used as a power source for medium- or large-sized devices such as power tools, electric vehicles (EVs), hybrid electric vehicles (HEVs), plug-in hybrid electric vehicles (PHEVs), or power storage systems.

Hereinafter, embodiments of the present invention will be described in greater detail through examples. However, the following examples are merely illustrative and do not limit the scope of the present invention.

### Example 1-1

### (1) Preparation of Positive Electrode Active Material

### (Preparation of Precursor)

A spherical transition metal hydroxide precursor was prepared by a co-precipitation method. The precursor was synthesized by dissolving NiSO₄·6H₂O, CoSO₄·7H₂O, and MnSO₄·H₂O in deionized (DI) water. NH₄OH was added as a chelating agent for co-precipitation, and NaOH was used for pH adjustment. Nitrogen gas (N₂) was purged to prevent oxidation of Ni during the co-precipitation, and the temperature of the reactor was maintained at 50°C. The obtained precursor was filtered, washed with DI water, and dried in an oven at 100°C for 24 hours. The average particle size (D50) of the resulting transition metal hydroxide precursor was approximately 3 to 5 µm. The metal composition of the resulting precursor was (Ni_{0.88}C_{O0.07}Mn_{0.05})(OH)₂.

### (Preparation of Lithium Transition Metal Oxide)

The prepared precursor and a lithium source, LiOH·H₂O, were mixed uniformly in a stoichiometric ratio such that the Li/Me ratio slightly exceeded 1. To improve structural stability and cycle life, 0.003 mol of Zr and 0.01 mol of Al were added, followed by calcination at 890°C for 24 hours to synthesize a lithium transition metal oxide having a composition of LiNi_{0.87}C_{O0.07}Mn_{0.05}Al_{0.01}O₂ in the form of single particles. The amount of Zr added was very small and thus was not included in the composition formula.

### (Formation of Coating Layer)

The obtained lithium transition metal oxide was dry-mixed with Co(OH)₂ as a cobalt source, Al(OH)₃ as an aluminum source, and LiOH·H₂Oas a lithium source. The amount of Co(OH)₂ was adjusted to 1.5 wt% based on the total weight of the lithium transition metal oxide, cobalt source, aluminum source, and lithium source. The amount of Al(OH)₃ was adjusted to 0.5 wt% based on the same total, and LiOH·H₂Owas mixed in an amount of 0.1 wt%. In this case, both Co(OH)₂ and Al₂O₃ were used as fine particles with a size of 200 to 500 nm. A coating layer was then formed by heat treatment at 710°C, thereby obtaining the positive electrode active material. The Co/Al molar ratio in the formed coating layer was 4, and the coating layer content was 1.5 wt% relative to the positive electrode active material.

### (2) Fabrication of Lithium Secondary Battery

A slurry for electrode plate fabrication was prepared by mixing the positive electrode active material, conductive agent (carbon black), and binder (PVDF, KF1120) in a weight ratio of 96.5:1.5:2. N-Methyl-2-pyrrolidone (NMP) was added to adjust the slurry viscosity to yield a solid content of about 30%. The slurry was coated on a 15 µm-thick aluminum foil using a doctor blade, followed by drying and calendaring. The electrode loading amount was 14.6 mg/cm², and the rolling density (at 25°C, 20 kN) was 3.7 g/cm³.

The electrolyte used was 1M LiPF₆ in EC:DMC:EMC = 3:4:3 (vol%). A coin cell was fabricated using a polypropylene (PP) separator and a lithium metal negative electrode (300 µm, MTI), and aged at room temperature for 10 hours.

### Example 1-2

The same lithium transition metal oxide as in Example 1-1 was used, and only the coating layer formation conditions were changed. Co(OH)₂ was added in an amount of 1.8 wt% based on the total weight of the lithium transition metal oxide, cobalt source, aluminum source, and lithium source. Al(OH)₃ was added in an amount of 0.05 wt% based on the same total, and LiOH·H₂Owas added in an amount of 0.1 wt%. Both Co(OH)₂ and Al₂O₃ were used as fine particles having a size of 200 to 500 nm. A coating layer was formed by heat treatment at 710°C to prepare the positive electrode active material. The Co/Al molar ratio in the formed coating layer was 17, and the coating content was 2.0 wt% relative to the positive electrode active material.

### Example 2

Except that the precursor had a composition of Ni₀.₉₂Co_{0.05}Mn_{0.03}(OH)₂ and the calcination temperature for the lithium transition metal oxide was set to 770°C to obtain LiNi_{0.91}Co_{0.05}Mn_{0.03}Al_{0.01}O₂ (the amount of Zr doping being too small to be included in the composition), the positive electrode active material and lithium secondary battery were fabricated in the same manner as in Example 1-1.

### Example 3

Except that the precursor had a composition of Ni_{0.96}Co_{0.03}Mn_{0.01}(OH)₂ and the calcination temperature for the lithium transition metal oxide was set to 750°C to obtain LiNi₀.₉₅ Co_{0.03}Mn_{0.01}Al_{0.01}O₂ (the amount of Zr doping being too small to be included in the composition), the positive electrode active material and lithium secondary battery were fabricated in the same manner as in Example 1-1.

### Example 4

Except that the precursor had a composition of Ni₀.₉₈Co_{0.01}Mn_{0.01}(OH)₂ and the calcination temperature for the lithium transition metal oxide was set to 730°C to obtain LiNi_{0.97}Co_{0.01}Mn_{0.01}Al_{0.01}O₂ (the amount of Zr doping being too small to be included in the composition), the positive electrode active material and lithium secondary battery were fabricated in the same manner as in Example 1-1.

### Example 5

Except that the precursor had a composition of Ni_{0.86}Co_{0.09}Mn_{0.05}(OH)₂ and the calcination temperature for the lithium transition metal oxide was set to 910°C to obtain LiNi_{0.85}Co_{0.09}Mn_{0.05}Al_{0.01}O₂ (the amount of Zr doping being too small to be included in the composition), the positive electrode active material and lithium secondary battery were fabricated in the same manner as in Example 1-1.

### Comparative Example 1

Except that the coating layer was formed by heat treatment at 760°C, the positive electrode active material and lithium secondary battery were fabricated in the same manner as in Example 1-1.

### Comparative Example 2

Except that the coating layer was formed by heat treatment at 760°C, the positive electrode active material and lithium secondary battery were fabricated in the same manner as in Example 2.

### Comparative Example 3

Except that the coating layer was formed by heat treatment at 760°C, the positive electrode active material and lithium secondary battery were fabricated in the same manner as in Example 3.

### Comparative Example 4

Except that the coating layer was formed by heat treatment at 760°C, the positive electrode active material and lithium secondary battery were fabricated in the same manner as in Example 4.

### Comparative Example 5

Except that the coating layer was formed by heat treatment at 760°C, the positive electrode active material and lithium secondary battery were fabricated in the same manner as in Example 5.

### Reference Example 1

Except that no aluminum source was added during the formation of the coating layer, Co(OH)₂ was added in an amount of 1.5 wt% based on the total weight of the lithium transition metal oxide, cobalt source, and lithium source, and LiOH·H₂Owas added in an amount of 0.07 wt% based on the same total, the positive electrode active material and lithium secondary battery were fabricated in the same manner as in Example 1-1.

### Reference Example 2

Except that no cobalt source was added during the formation of the coating layer, Al(OH)₃ was added in an amount of 1.5 wt% based on the total weight of the lithium transition metal oxide, aluminum source, and lithium source, and LiOH·H₂Owas added in an amount of 0.07 wt% based on the same total, the positive electrode active material and lithium secondary battery were fabricated in the same manner as in Example 1-1.

### Reference Example 3

Except that the weight ratio among Co(OH)₂, Al(OH)₃, and LiOH·H₂O was adjusted such that the Co/Al molar ratio in the coating layer became 2, the positive electrode active material and lithium secondary battery were fabricated in the same manner as in Example 1-1.

### Reference Example 4

Except that the weight ratio among Co(OH)₂, Al(OH)₃, and LiOH·H₂O was adjusted such that the Co/Al molar ratio in the coating layer became 1, the positive electrode active material and lithium secondary battery were fabricated in the same manner as in Example 1-1.

### Reference Example 5

Except that the weight ratio among Co(OH)₂, Al(OH)₃, and LiOH·H₂Owas maintained the same, but the total amount of the coating components was reduced such that the coating content became 0.8 wt% relative to the positive electrode active material, the positive electrode active material and lithium secondary battery were fabricated in the same manner as in Example 1-1.

### Reference Example 6

Except that the weight ratio among Co(OH)₂, Al(OH)₃, and LiOH·H₂Owas maintained the same, but the total amount of the coating components was increased such that the coating content became 3.2 wt% relative to the positive electrode active material, the positive electrode active material and lithium secondary battery were fabricated in the same manner as in Example 1-1.

Table 1 below summarizes the compositions of the positive electrode active materials and the processing conditions for Examples 1-1 to 1-5, Comparative Examples 1 to 5, and Reference Examples 1 to 6.

**[Table 1]**

| | Composition of Transition Metal Oxide | Elements of Coating Layer | Type of Coating Layer | Coating Layer Content (wt%) | Co/Al Molar Ratio in Coating Layer | Calcinati on Temperat ure (°C) | Coatin g Heat Treat ment Tempe rature (°C) |
|---|---|---|---|---|---|---|---|
| Example 1-1 | LiNi_{0.87}Co_{0.07}Mn_{0.05}Al_{0.01}O₂ | Co, Al | Island | 1.5 | 4 | 890 | 710 |
| Example 1-2 | LiNi_{0.87}Co_{0.07}Mn_{0.05}Al_{0.01}O₂ | Co, Al | Island | 2.0 | 17 | 890 | 710 |
| Comparative Example 1 | LiNi_{0.87}CO_{0.07}Mn_{0.05}Al_{0.01}O₂ | Co, Al | Conformal | 1.5 | 4 | 890 | 760 |
| Reference Example 1 | LiNi_{0.87}CO_{0.07}Mn_{0.05}Al_{0.01}O₂ | Co | Island | 1.5 | - | 890 | 710 |
| Reference Example 2 | LiNi_{0.87}CO_{0.07}Mn_{0.05}Al_{0.01}O₂ | Al | Island | 1.5 | 0 | 890 | 710 |
| Reference Example 3 | LiNi_{0.87}CO_{0.07}Mn_{0.05}Al_{0.01}O₂ | Co, Al | Island | 1.5 | 2 | 890 | 710 |
| Reference Example 4 | LiNi_{0.87}CO_{0.07}Mn_{0.05}Al_{0.01}O₂ | Co, Al | Island | 1.5 | 1 | 890 | 710 |
| Reference Example 5 | LiNi_{0.87}CO_{0.07}Mn_{0.05}Al_{0.01}O₂ | Co, Al | Island | 0.8 | 4 | 890 | 710 |
| Reference Example 6 | LiNi_{0.87}CO_{0.07}Mn_{0.05}Al_{0.01}O₂ | Co, Al | Island | 3.2 | 4 | 890 | 710 |
| Example 2 | LiNi_{0.91}Co_{0.05}Mn_{0.03}Al_{0.01}O₂ | Co, Al | Island | 1.5 | 4 | 770 | 710 |
| Comparative Example 2 | LiNi_{0.91}Co_{0.05}Mn_{0.03}Al_{0.01}O₂ | Co, Al | Conformal | 1.5 | 4 | 770 | 760 |
| Example 3 | LiNi_{O.95}Co_{0.03}Mn_{0.01}Al_{0.01}O₂ | Co, Al | Island | 1.5 | 4 | 750 | 710 |
| Comparative Example 3 | LiNi_{0.95}Co_{0.03}Mn_{0.01}Al_{0.01}O₂ | Co, Al | Conformal | 1.5 | 4 | 750 | 760 |
| Example 4 | LiNi_{0.97}Co_{0.01}Mn_{0.01}Al_{0.01}O₂ | Co, Al | Island | 1.5 | 4 | 730 | 710 |
| Comparative Example 4 | LiNi_{0.97}Co_{.01}Mn_{0.01}Al_{0.01}O₂ | Co, Al | Conformal | 1.5 | 4 | 730 | 760 |
| Example 5 | LiNi_{0.85}Co₀₉Mn_{0.05}Al_{0.01}O₂ | Co, Al | Island | 1.5 | 4 | 910 | 710 |
| Comparative Example 5 | LiNi_{0.85}Co_{0.09}Al_{0.01}O₂ | Co, Al | Conformal | 1.5 | 4 | 910 | 760 |

### Experimental Example 1: SEM Image Analysis of Positive Electrode Active Material

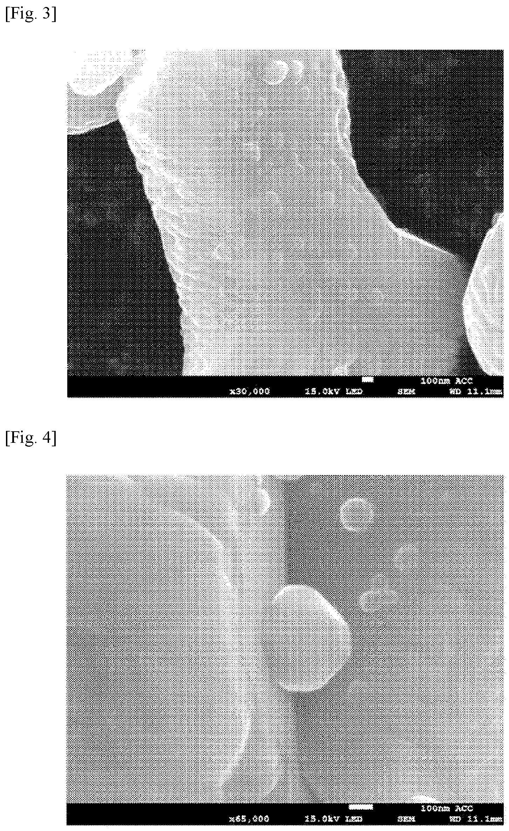

Scanning electron microscope (SEM) images of the positive electrode active materials prepared in accordance with Example 1-1 and Comparative Example 1 were captured. The results are shown in FIGS. 3 (Example 1-1) and 4 (Comparative Example 1).

Referring to FIGS. 3 and 4, in the case of Example 1-1, it was confirmed that discontinuous coating materials in the form of protrusions or hemispheres having a size of 100 to 300 nm were present on the surface of the lithium transition metal oxide. Accordingly, it was observed that an island-type coating layer was formed.

In contrast, in Comparative Example 1, a full-surface coating layer was formed with a smooth morphology, indicating that the coating was continuously and uniformly spread across the surface.

### Experimental Example 2: Image Analysis after Focused Ion Beam (FIB) Milling of Active Material

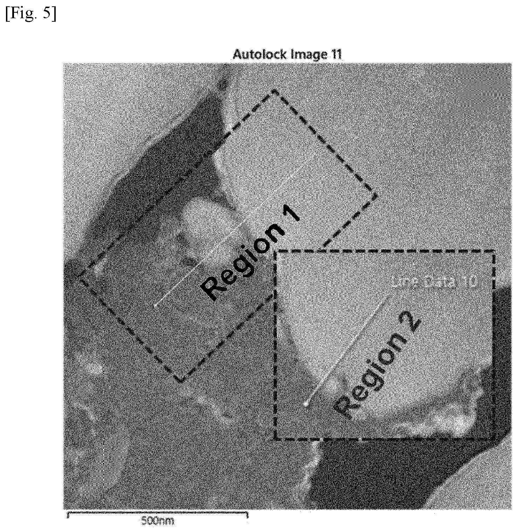

Focused ion beam (FIB) milling was performed on the positive electrode active materials prepared according to Example 1-1 and Comparative Example 1, and images were captured. The results are shown in FIGS. 5 (Example 1-1) and 6 (Comparative Example 1).

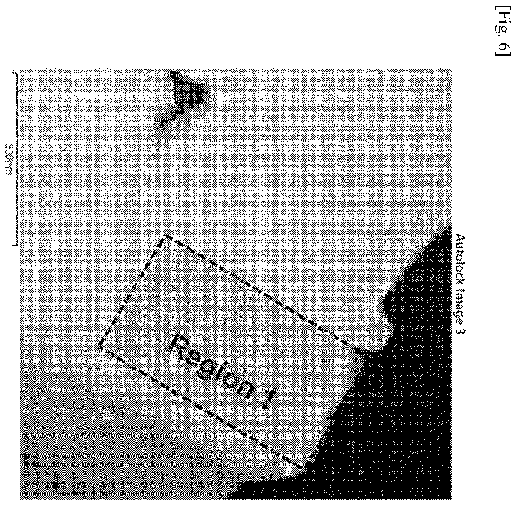

Referring to FIGS. 5 and 6, in the case of Example 1-1, it was confirmed that the coating particles were present discontinuously on the surface of the lithium transition metal oxide.

In contrast, in Comparative Example 1, it was observed that the coating particles were continuously and uniformly coated across the surface.

### Experimental Example 3: Elemental Mapping Analysis of FIB-Milled Image

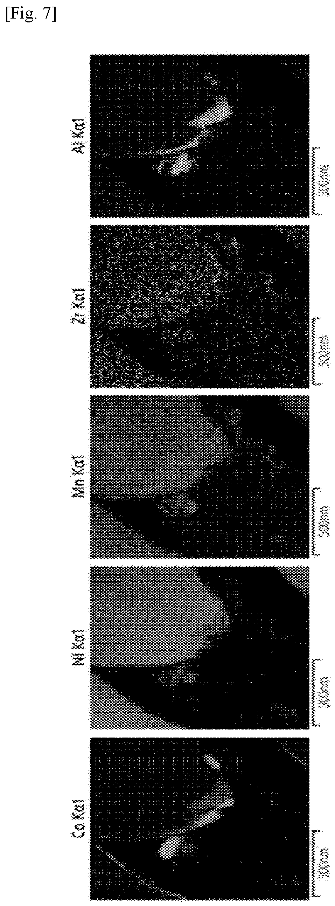

Elemental mapping was performed on the FIB-milled image of the positive electrode active material prepared according to Example 1-1, and the results are shown in FIG. 7.

Referring to FIG. 7, it was confirmed that nickel, manganese, and the dopant element zirconium were distributed throughout the interior of the lithium transition metal oxide. Meanwhile, the coating elements cobalt and aluminum were predominantly present on the surface of the lithium transition metal oxide.

### Experimental Example 4: EDS Line Scan Analysis of FIB-Milled Image

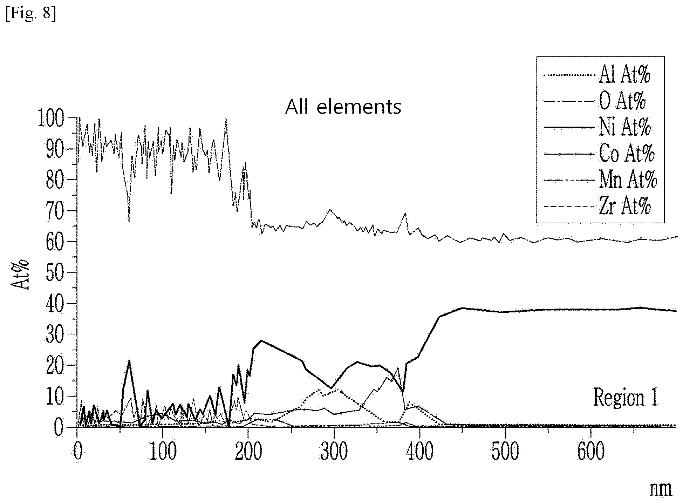

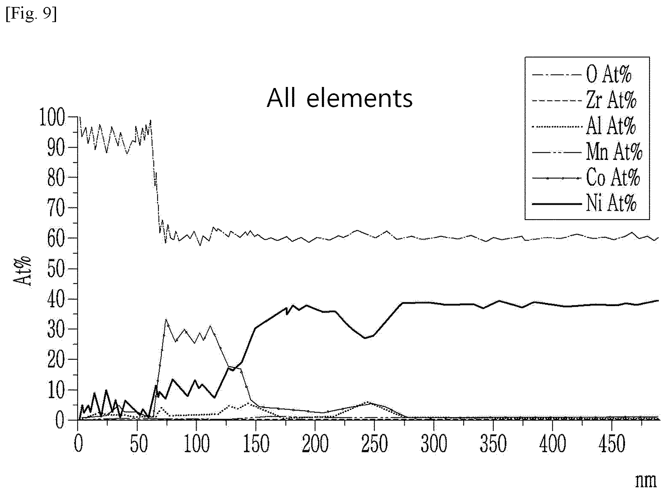

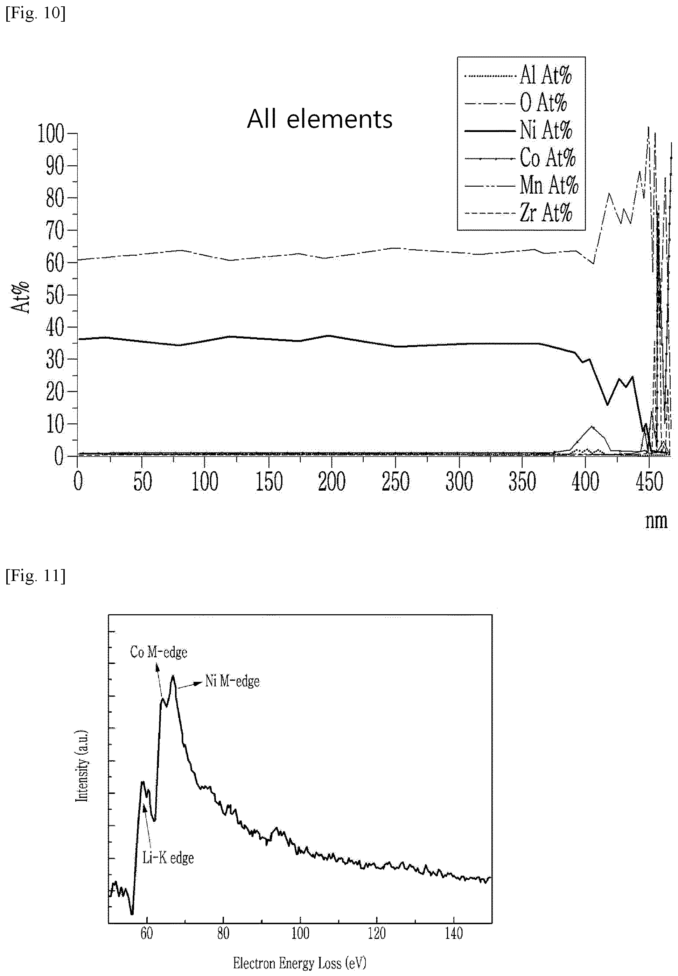

Energy-dispersive spectroscopy (EDS) line scans were conducted from the interior to the exterior of the positive electrode active material in Region 1 and Region 2 of the FIB-milled image of Example 1-1. The results are shown in FIGS. 8 and 9, respectively. Additionally, an EDS line scan was performed in Region 1 of the FIB-milled image of the positive electrode active material of Comparative Example 1, and the result is shown in FIG. 10.

Referring to FIGS. 8 and 9, in the case of Example 1-1, cobalt and aluminum were detected in both Region 1 and Region 2, consistent with the elemental distribution observed in the elemental mapping of FIG. 7. Moreover, the gradual concentration gradient of cobalt and aluminum indicated a continuous structural connection between the layered crystal structure of the coating layer and the core without lattice distortion.

In contrast, referring to FIG. 10, in the case of Comparative Example 1, a significantly lower amount of cobalt and almost no aluminum were detected. This is interpreted as the result of cobalt and aluminum diffusing into the active material during high-temperature heat treatment, thereby reducing the coating effect.

### Experimental Example 5: ELLS Analysis of Coating Layer

Electron energy loss spectroscopy (EELS) analysis was conducted on the coating layer of the positive electrode active material prepared according to Example 1-1. The result is shown in FIG. 11.

Referring to FIG. 11, it was confirmed that lithium was present in the coating layer. This suggests that residual lithium, remaining after the formation of the lithium transition metal oxide, reacted with the coating components cobalt and aluminum to form a lithium-cobalt-aluminum composite oxide composition in the coating layer.

### Experimental Example 6: TEM Cross-Sectional Image Analysis of Active Material

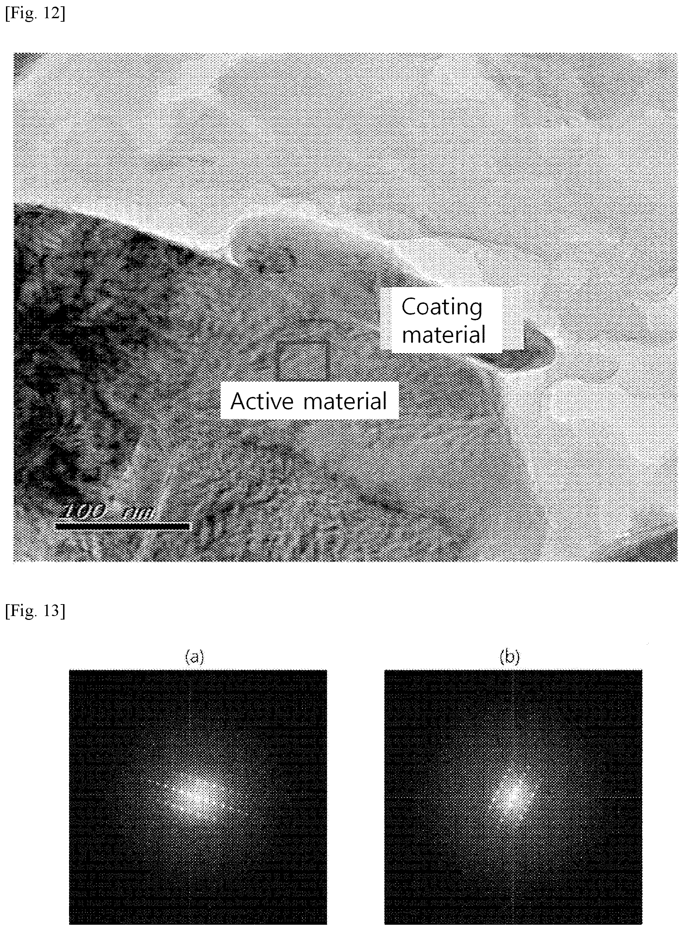

A transmission electron microscope (TEM) cross-sectional image of the positive electrode active material prepared according to Example 1-1 was analyzed, and the result is shown in FIG. 12.

Referring to FIG. 12, it was confirmed that the positive electrode active material of Example 1-1 consisted of a lithium transition metal oxide core and an island-type coating layer.

### Experimental Example 7: SAED Pattern Analysis of Core and Coating Layer

Selected area electron diffraction (SAED) pattern analysis was performed on the positive electrode active material prepared according to Example 1-1, and the results are shown in FIG. 13. FIG. 13(a) shows the SAED pattern for the core region, and FIG. 13(b) shows the SAED pattern for the coating layer region.

Referring to FIG. 13, it was confirmed that both the core and coating layer of the positive electrode active material of Example 1-1 exhibited a well-defined layered structure. This demonstrates that the coating layer possessed a layered structure composed of lithium-cobalt-aluminum composite oxide.

### Experimental Example 8: Evaluation of Electrochemical Characteristics of Lithium Secondary Battery

The electrochemical characteristics of lithium secondary batteries prepared according to Examples 1-1 to 1-5, Comparative Examples 1 to 5, and Reference Examples 1 to 4 were evaluated, and the results are shown in Table 2 below. The specific experimental procedures were as follows:

### (1) Evaluation of Initial Discharge Capacity and Initial Efficiency

The capacity evaluation was based on a standard capacity of 200 mAh/g. The charge/discharge conditions were CC/CV mode within a voltage range of 2.5 to 4.25 V, with a 1/20 C cut-off. The initial capacity was measured using 0.1 C charge / 0.1 C discharge conditions.

### (2) Evaluation of Initial Resistance at 25°C

Room-temperature resistance (DC-iR) was evaluated at 25°C. After fully charging the cell to 4.25 V (100% SOC), discharge current was applied and the voltage was measured after 60 seconds to calculate the internal resistance.

### (3) Evaluation of Cycle Life Characteristics at High Temperature (45°C) and Room Temperature (25°C)

High-temperature cycle life was measured over 50 cycles under 0.3 C charge / 0.3 C discharge conditions at 45°C.
Room-temperature cycle life was measured over 50 cycles under 0.3 C charge / 0.3 C discharge conditions at 25°C.

### (4) Evaluation of Resistance Increase Ratio at High Temperature

The resistance increase ratio was calculated by comparing the resistance measured after 50 cycles at 45°C with the initial resistance. The resistance after cycling was measured using the same method as for initial resistance, and the increase was expressed as a percentage.

### (5) Thermal Analysis Using Differential Scanning Calorimetry (DSC)

For DSC analysis, coin cells were charged to 4.25 V under 0.1 C conditions. After disassembling the cells, only the positive electrodes were retrieved and washed five times with DMC. The prepared electrodes were placed in a DSC crucible along with electrolyte, and DSC measurements were conducted while raising the temperature. The DSC equipment used was the DSC1 STAR System by Mettler Toledo.

### (6) Evaluation of Output Characteristics (2C/0.1C Ratio)

The output characteristic was evaluated by dividing the capacity measured at 2C discharge by the capacity measured at 0.1C discharge and converting the ratio to a percentage.

**[Table 2]**

| | Discharge Capacity (mAh/g) | Initial Efficiency (%) | Initial Resistance (Ω) | Room-Temperature Cycle Life (50 cycles, %) | High-Temperature Cycle Life (50 cycles, %) | High-Temperature Resistance Increase Ratio (%) | DSC Peak Temperature (°C) | 2C Rate Performance (%) |
|---|---|---|---|---|---|---|---|---|
| Example 1-1 | 201.2 | 89.1 | 30.5 | 93.3 | 92.1 | 76.2 | 230.4 | 90.2 |
| Example 1-2 | 201.9 | 89.0 | 30.3 | 93.1 | 91.9 | 76.3 | 229.0 | 90.4 |
| Comparative Example 1 | 195.3 | 87.3 | 45.3 | 88.5 | 85.1 | 100.3 | 227.2 | 84.3 |
| Reference Example 1 | 203.5 | 90.1 | 30.0 | 92.0 | 88.9 | 79.0 | 227.3 | 91.0 |
| Reference Example 2 | 195.2 | 87.2 | 43.5 | 91.5 | 88.0 | 88.9 | 228.5 | 85.5 |
| Reference Example 3 | 198.0 | 87.5 | 45.6 | 93.0 | 91.5 | 77.5 | 231.5 | 86.5 |
| Reference Example 4 | 196.6 | 87.5 | 45.5 | 92.8 | 91.7 | 79.9 | 232.0 | 85.5 |
| Reference Example 5 | 204.5 | 89.6 | 30.3 | 89.0 | 86.3 | 91.5 | 227.9 | 89.5 |
| Reference Example 6 | 196.0 | 86.9 | 44.0 | 94.0 | 92.9 | 78.5 | 229.7 | 85.0 |
| Example 2 | 209.5 | 89.0 | 33.5 | 91.2 | 88.5 | 88.2 | 227.2 | 88.2 |
| Comparative Example 2 | 204.2 | 86.5 | 47.2 | 86.2 | 82.1 | 110.5 | 225.3 | 82.5 |
| Example 3 | 220.3 | 89.3 | 35.2 | 89.3 | 86.8 | 92.1 | 220.7 | 87.3 |
| Comparative Example 3 | 214.2 | 86.7 | 49.2 | 82.1 | 80.1 | 130.5 | 213.5 | 81.2 |
| Example 4 | 223.5 | 87.3 | 42.1 | 86.2 | 82.5 | 120.1 | 210.7 | 85.5 |
| Comparative Example 4 | 217.2 | 85.2 | 55.2 | 82.1 | 76.7 | 145.5 | 202.5 | 78.8 |
| Example 5 | 201.5 | 90.4 | 25.1 | 97.5 | 95.4 | 62.4 | 236.6 | 93.5 |
| Comparative Example 5 | 199.2 | 89.2 | 29.3 | 95.2 | 93.8 | 77.1 | 233.3 | 92.1 |

Referring to Table 2, it was confirmed that Examples 1-1 to 1-5 exhibited significantly superior performance in all aspects-including cell capacity, initial efficiency, initial resistance, room-temperature and high-temperature cycle life characteristics, high-temperature resistance increase ratio, DSC peak temperature, and output performance-compared to Comparative Examples 1 to 5, in which the only variable was the heat treatment temperature during the formation of the coating layer. This improvement is attributed to the fact that Examples 1-1 to 1-5 employed an island-type coating layer, whereas Comparative Examples 1 to 5 formed a conformal-type coating layer, where excessive diffusion of cobalt and aluminum into the active material reduced the effectiveness of the coating.

In addition, although the amount of cobalt added was increased and the amount of aluminum was reduced in Example 1-2 compared to Example 1-1, the excellent electrical conductivity and life-improving effects of the cobalt component successfully compensated for the potential performance degradation that might have resulted from the reduced aluminum content, especially with respect to cycle life.

Meanwhile, Reference Example 1 showed lower high-temperature and room-temperature cycle life characteristics, as well as a lower high-temperature resistance increase ratio and DSC peak temperature, compared to Example 1-1. Reference Example 2 exhibited inferior performance in all aspects-capacity, initial efficiency, initial resistance, room-temperature and high-temperature cycle life, high-temperature resistance increase ratio, DSC peak temperature, and output-compared to Example 1-1. These results demonstrate that using both cobalt and aluminum as coating elements is more desirable than using either one alone.

Further, Reference Examples 3 and 4 exhibited decreased performance in terms of capacity, initial efficiency, initial resistance, room-temperature and high-temperature cycle life, high-temperature resistance increase ratio, and output, compared to Example 1-1, with the exception of the DSC peak temperature. This suggests that a Co/Al molar ratio that is too low can lead to deteriorated battery performance.

Moreover, Reference Example 5 showed inferior high-temperature and room-temperature cycle life characteristics, high-temperature resistance increase ratio, DSC peak temperature, and output performance, while Reference Example 6 demonstrated degraded capacity, initial efficiency, initial resistance, high-temperature resistance increase ratio, DSC peak temperature, and output performance when compared to Example 1-1. These results confirm that either an excessively low or excessively high content of the coating layer can lead to deterioration in battery performance.

Although the foregoing describes preferred embodiments of the present invention, it should be understood that the present invention is not limited thereto and may be implemented in various modified forms within the scope of the appended claims, the detailed description of the invention, and the accompanying drawings, all of which fall within the scope of the present invention.

### [Description of Reference Numerals]

100: Positive electrode active material
10: Core
20: Coating layer

## Claims

1. A positive electrode active material for a lithium secondary battery, comprising:
a core comprising a layered lithium transition metal oxide containing 60 mol% or more of nickel (Ni) based on the total moles of transition metals; and
a coating layer disposed on the core and comprising cobalt (Co), aluminum (Al), or a combination thereof,
wherein the positive electrode active material is composed of a single particle, and
wherein the coating layer is in an island-type structure.

2. The positive electrode active material of claim 1,
wherein the nickel content is 85 mol% or more based on the total moles of transition metals.

3. The positive electrode active material of claim 1,
wherein the coating layer further comprises lithium and is an oxide.

4. The positive electrode active material of claim 1,
wherein the coating layer is formed in a discontinuous pattern of protrusions or hemispherical shapes disposed on the core.

5. The positive electrode active material of claim 1,
wherein the coating layer has a layered crystal structure.

6. The positive electrode active material of claim 5,
wherein the coating layer is structurally connected to the core via the layered crystal structure.

7. The positive electrode active material of claim 1,
wherein the coating layer comprises cobalt and aluminum, and
a molar ratio (Co/Al) of cobalt to aluminum is from 3 to 18.

8. The positive electrode active material of claim 1,
wherein the content of the coating layer is from 1 wt% to 3 wt% based on the total weight of the positive electrode active material.

9. The positive electrode active material of claim 1,
wherein the lithium transition metal oxide further comprises zirconium (Zr), aluminum (Al), or a combination thereof.

10. The positive electrode active material of claim 1,
wherein the lithium transition metal oxide is represented by the following Chemical Formula 1:
[Chemical Formula 1] Liₐ[NiₓCo_{γ}Mn*z*M₁*w*₁M₂*w*₂]O₂
wherein 0.8 ≤ a ≤ 1.2, 0.6 ≤ x< 0.97, 0 ≤ y ≤ 0.2, 0 < z ≤ 0.2, 0 ≤ w₁ ≤ 0.1, 0 ≤ w₂ ≤ 0.1,
M₁ is Zr, Al, or a combination thereof, and
M₂ is Mg, Ti, Nb, W, Sc, Si, V, Fe, Y, Mo, Ce, Hf, Ta, La, Sr, or a combination thereof.

11. A method for manufacturing a positive electrode active material for a lithium secondary battery, comprising:
preparing a transition metal hydroxide comprising nickel;
forming a mixture comprising the transition metal hydroxide and a lithium raw material and performing calcination at a temperature from 710°C to 930°C to form a lithium transition metal oxide; and
mixing the lithium transition metal oxide with a coating raw material and performing heat treatment at a temperature from 670°C to 740°C to form a coating layer,
wherein the coating raw material comprises a cobalt raw material, an aluminum raw material, or a combination thereof.

12. The method of claim 11,
wherein, in the step of forming the lithium transition metal oxide, the mixture further comprises a doping raw material,
and the doping raw material comprises a zirconium raw material, an aluminum raw material, or a combination thereof.

13. The method of claim 11,
wherein, in the step of forming the coating layer,
the content of the coating raw material is from 1 wt% to 3 wt% based on the total weight of the lithium transition metal oxide and the coating raw material.

14. The method of claim 11,
wherein the coating raw material is a fine particle having an average particle diameter (D50) of 200 to 500 nm.

15. A positive electrode comprising the positive electrode active material of any one of claims 1 to 10.

16. A lithium secondary battery comprising a positive electrode,
wherein the positive electrode comprises the positive electrode active material of any one of claims 1 to 10.
